(19) Europäisches Patentamt
European Patent Office
Office européen des brevets

(11) **EP 1 577 046 B1**

(12) **EUROPEAN PATENT SPECIFICATION**

(45) Date of publication and mention
of the grant of the patent:
**25.11.2009 Bulletin 2009/48**

(21) Application number: **05102119.4**

(22) Date of filing: **17.03.2005**

(51) Int Cl.:
*B23K 11/00* (2006.01)  *H05B 3/84* (2006.01)
*B23K 11/31* (2006.01)  *B23K 11/25* (2006.01)
*H05K 13/04* (2006.01)  *B23K 37/04* (2006.01)
*B23K 1/00* (2006.01)  *B23K 3/047* (2006.01)

(54) **Method and device for fixing a functional member to a surface**

Verfahren und Vorrichtung zum Befestigung einer Baugruppe an einer Oberfläche

Méthode et appareil pour joindre un organe fonctionnel à une surface

(84) Designated Contracting States:
**AT BE BG CH CY CZ DE DK EE ES FI FR GB GR HU IE IS IT LI LT LU MC NL PL PT RO SE SI SK TR**

(30) Priority: **18.03.2004 EP 04425189**

(43) Date of publication of application:
**21.09.2005 Bulletin 2005/38**

(73) Proprietor: **Vincenzi, Augusto**
**00125 Roma RM (IT)**

(72) Inventor: **Vincenzi, Augusto**
**00125 Roma RM (IT)**

(74) Representative: **Leone, Mario et al**
**Società Italiana Brevetti S.p.A.**
**Piazza di Pietra 39**
**00186 Roma (IT)**

(56) References cited:
**EP-A- 0 041 928**   **US-A- 3 462 577**
**US-A- 4 908 938**   **US-A1- 2001 000 900**
**US-A1- 2004 144 758**

**Description**

The present invention relates to a method and a device for fixing a functional member to a surface by application of heat, obtained by virtue of the so-called Joule effect.

More particularly, this invention relates to the field of the application of conductive functional members to a surface, by application of heat interacting with an additional fixing material. The latter could be an additional material for brazing, a heat-activated adhesive resin, etc.

Typically, the surface could be made of a glass pane, whereas the functional member could e.g. make an electric contact for power-supplying a heat-resisting circuit or for collecting the signal of an antenna silk-screen printed onto the glass surface.

There are several known systems for carrying out said application. EP-B-41928 describes a specific embodiment wherein the Joule effect is attained by positioning a pair of pointed electrodes onto the functional member to be fixed, each at a brazing material. The electrodes and the functional member are part of an electric circuit in which current flow is induced. At the points making the contact between the electrodes and the functional member, due to the reduced flow section, a point-localized increase of the resistance occurs that, due to the nature thereof, generates heat by Joule effect.

This heat is applied just at said weld material, which, by melting, implements the application of the functional member. Upon discontinuing the electric current flow, after a predetermined time, the application of heat ceases and the weld spot, thus created rapidly cools by loss of heat.

However, this application method is not free from drawbacks, above all linked to the wear of the electrode points, which, over time, become blunt. Therefore, in order to ensure a suitable application of heat, it is necessary to supply the related electric circuit with a higher voltage and/or for an extended time, anyhow requiring the controlling and the frequent replacing of the pointed electrodes. Otherwise, over time, this application method would lead to uneven and finally defective welding.

Moreover, with such a method it is impossible to detect differences in the wear between electrodes of the same circuit. Therefore, when there is such a difference, the latter unavoidably leads to the forming of uneven weld spots onto the same functional member. This unevenness is detectable only visually by an operator, who then should interrupt the application process, dispose of the erroneously applied functional member, replace one or both of the electrodes and repeat the application.

US-6,335,514-B2 discloses a method and a device according to the preamble of claims 1 and 6, and describes an assembly for soldering functional members to a glass, provided with a pair of pointed contacts, to form two solder points, and a further electrical connection element to form, with each of said pointed contacts, a respective electric circuit that is power-supplied selectively, making the concomitant and integrated adjustment of both solder points impossible.

US-4,908,938-A describes an apparatus for repairing, by welding, integrated circuit cards, with a pair of welding electrodes working in conjunction with a third electrode. The energy supply occurs in pulses in alternation on circuits formed by the third electrode and one of the two welding electrodes, respectively. Again, any possibility of concomitant welding and adjustment is prevented.

US-4,418,264-A relates to a device for repairing conductors by welding, similar in operation to the preceding one and therefore entailing the same drawbacks.

The technical problem underlying the present invention is to provide a method and a device for fixing functional members overcoming the drawbacks mentioned with reference to the known art.

This problem is solved by a method as specified above, wherein the Joule effect is determined by the concomitant application onto the functional member of a pair of high-resistance contact electrodes, each at a respective spot for fixing the functional member to said surface, and of a respective low-resistance contact electrode near said high-resistance contact electrodes, said low-resistance contact electrode making, with each of the high-resistance electrodes of said pair, a respective and independent electric circuit, characterized in that each independent electric circuit is power-supplied concomitantly and in which the current flow and the voltage value are monitored and adjusted separately in order to apply the quantity of energy required for each fixing spot.

According to the same inventive concept, said problem is solved by a device as specified above, comprising: a pair of high-resistance contact electrodes, each apt to be applied at a respective spot for fixing the functional member to said surface; at least one low-resistance contact electrode, apt to be applied near said high-resistance contact electrodes, said low-resistance contact electrode making, with each of the high-resistance electrodes of said pair, a respective and independent electric circuit; means for flowing current in each of said electric circuits comprising a pair of independent power supplies, each apt to supply a respective independent electric circuit; and means for controlling and adjusting the voltage or current applied concomitantly to each of said electric circuits independently the one from the other to apply the quantity of energy required for each fixing spot.

The main advantage of the method and of the device according to the present invention lies in allowing a suitable control of the heat applied at each high-resistance contact electrode, regardless of the wear of each.

Hence, the visual controls and the electrode replacements may conveniently be reduced, facilitating the use of this application method. Moreover, the abovedefined method and device are susceptible of being used in a highly automated and robotized context.

According to a preferred yet not exclusive version of the present invention, said high-resistance contact electrodes are obtained by means of electrodes having a reduced contact surface.

Likewise, said low-resistance contact electrodes are obtained by means of electrodes with a rounded contact end having a larger contact surface.

This specific configuration of the electrodes ensures the generation of heat onto the ends having a smaller contact surface, where the resistance is higher, whereas the end having a larger contact surface, not being subject to specific pressure and heating, is characterised by a reduced wear.

Of course, it is proposed that high and low electrical resistances could be attained with methods alternative in the configuration of the electric contact, the typology of the material used and optional adding of additional conductive pastes or members or the like at the low-resistance contact.

Moreover, it is proposed that the application of heat could activate any heat-sensitive fixing system: local melting of the functional member or of the surface receiving it, melting of a brazing material, melting of a conductive or nonconductive heat-melting resin, hardening of a conductive or non-conductive thermosetting resin, etc.

The present invention will hereinafter be described according to a preferred embodiment thereof, given by way of example and without limitative purposes with reference to the annexed drawings, wherein:

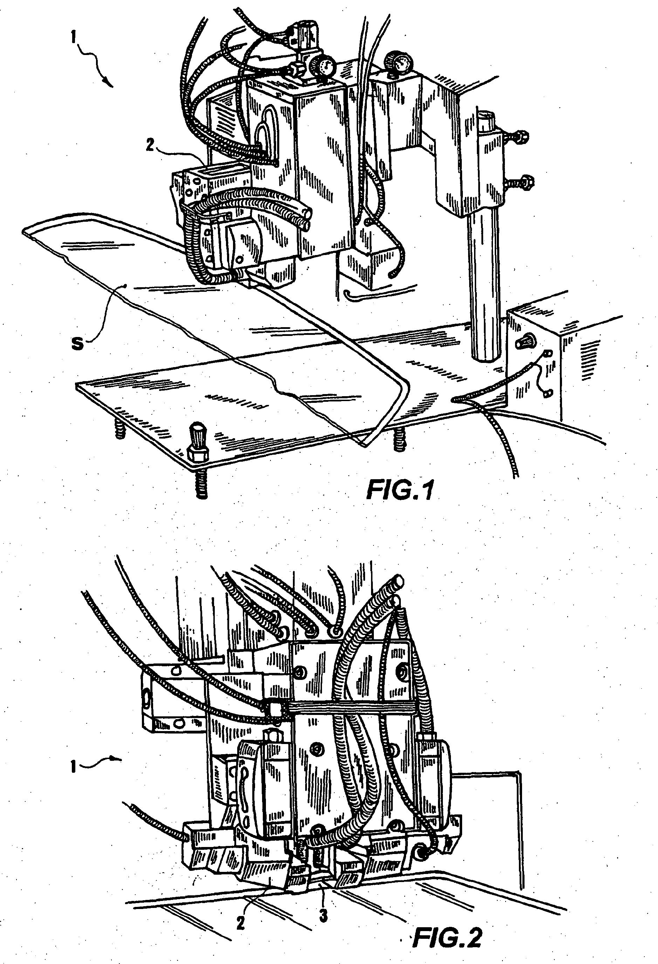

* figure 1 shows a general perspective side view of a device for fixing a functional member to a surface according to an embodiment of the present invention, operating on the basis of the method for fixing functional members to a surface according to the invention;

* figure 2 shows a general perspective front view of the device of figure 1;

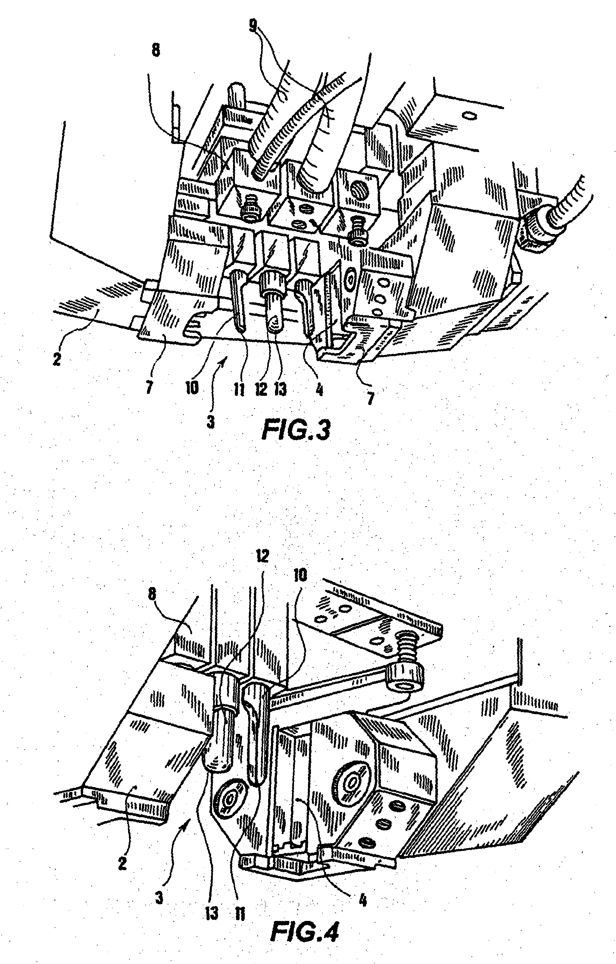

* figure 3 shows a perspective view from the bottom of a detail of the device of figure 1;

* figure 4 shows a perspective side view of the detail of figure 3;

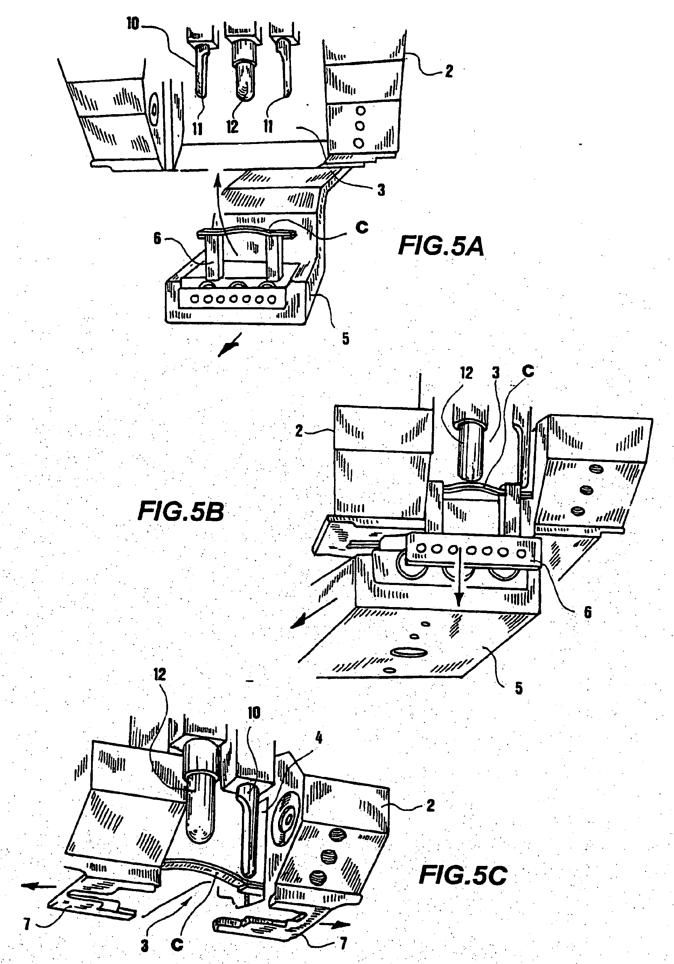

* figures 5A, 5B, 5C and 5D show respective enlarged perspective views of the detail of figure 3, illustrating various steps of the method for fastening according to the invention;

* figure 6 schematically shows a front elevation view of the detail of figure 3; and

* figure 7 shows the circuitry diagram of the device of figure 1.

With reference to the figures, hereinafter it will be described an embodiment of the present invention in the field of fixing of conductive functional members to the surface of a glass pane S, in particular for making an electric contact for electrically connecting an electric circuit, incorporated into or silk-screen printed onto the glass pane S, to a power supply or to other devices.

This application is used e.g. to make heat-resisting circuits on heated backlights or windscreens for vehicle windows or to obtain antennas.

In the figures, a device for fixing a conductive functional member to a surface by application of energy obtained by Joule effect is generally indicated by 1 and it comprises an operative head 2, connected to means for power-supplying and to means for adjusting and controlling that will be mentioned hereinafter.

At the front side, said operative head comprises a recess 3 that is apt to house a conductive functional member, indicated by C.

This functional member, in the present embodiment, is shaped as a double-T bridge, apt to implement a pair of fixing and electric contact spots onto the surface where it will be applied. However, it is proposed that the shape of the functional member will be any one, and the means receiving said functional member could be shape-adjusted in order to better manage such a functional member C.

At said recess 3, the device 1 comprises means for guiding said functional member in an applying position. In the present embodiment, said means for guiding comprises a pair of vertical grooves 4, formed sideways inside of opposite walls of the recess 3.

Said grooves 4 receive the respective ends of the functional member C.

The recess 3 is fed functional members C by a pivotable arm 5, provided with an operative end 6 apt to move a functional member C. This operative end is movable between a position in which it receives a single functional member C from a feeding station (not shown), optionally equipped with magazines preloaded with a set of functional members C to be applied, and said recess 3.

Said arm 5 pivots on a plane located below said recess 3, and when the operative end 6 lies at the recess 3 the arm 5 is translated vertically, enabling the operative end 6, provided with the functional member C, to insert into the recess 3, thereby inserting the ends of the functional member C in the respective grooves 4.

The device 1 further comprises means for positioning the receiving surface, in this case belonging to the glass pane S, and the operative head 2 of the device 1 in an applying position.

Such means could operate by positioning the pane S, the latter being fed by a conventional conveyer (not shown). Alternatively, or in combination, it will be the operative head 2 or the entire device 1 to be translated from a functional member loading position to an applying position. In particular, the present device is susceptible of being mounted on a robotized arm.

At the bottom ends of the grooves 4, the device 1 comprises respective anti-scratch buffers 7, designed to rest onto the glass pane.

Above said buffers 7, the device comprises catches 20, each arranged transversally to a respective groove 4. Said catches 20 are retractable according to a direction perpendicular to the development of the grooves 4, and therefore can obstruct said means for guiding.

Inside the recess 3, the device 1 comprises a slide 8 that is suitably power-supplied via electric cables 9.

From the slide 8 there extend, in a direction substantially parallel to the grooves 4 and bottomward, i.e. toward the position at which the glass pane S will be placed, three rods that, as it will be made apparent hereinafter, work as electrodes.

Said rods are parallel, substantially equidistant and lying on the same plane. The two outer rods form a pair of high-resistance contact electrodes 10, each apt to be applied at a respective spot B for fixing the functional member C to the surface of the glass pane S.

For this purpose, each high-resistance contact electrode 10 has a respective contact end 11 with a reduced contact surface. The electrode is of cylindrical shape, and the end tip making the contact is obtained by a longitudinal removal of a cylinder segment, reducing the section of the electrode 10 with a progression culminating with the contact end 11.

Suchlike end tips, with respect to the more traditional pointed ones, yield a higher resistance to wear and breakage. Hence, it is possible to use more cost-effective materials.

Moreover, by eliminating the requirement of high hardness of the material used, it is possible to use materials more suitable with regard to electrical features, like e.g. high-resistance metal alloys, yielding electrodes more cost-effective with respect to the commonly used ones, made of graphite and point-shaped, requiring less maintenance with respect to the known solutions.

Instead, the central rod forms a low-resistance contact electrode 12, which is apt to be applied near said high-resistance contact electrodes 10.

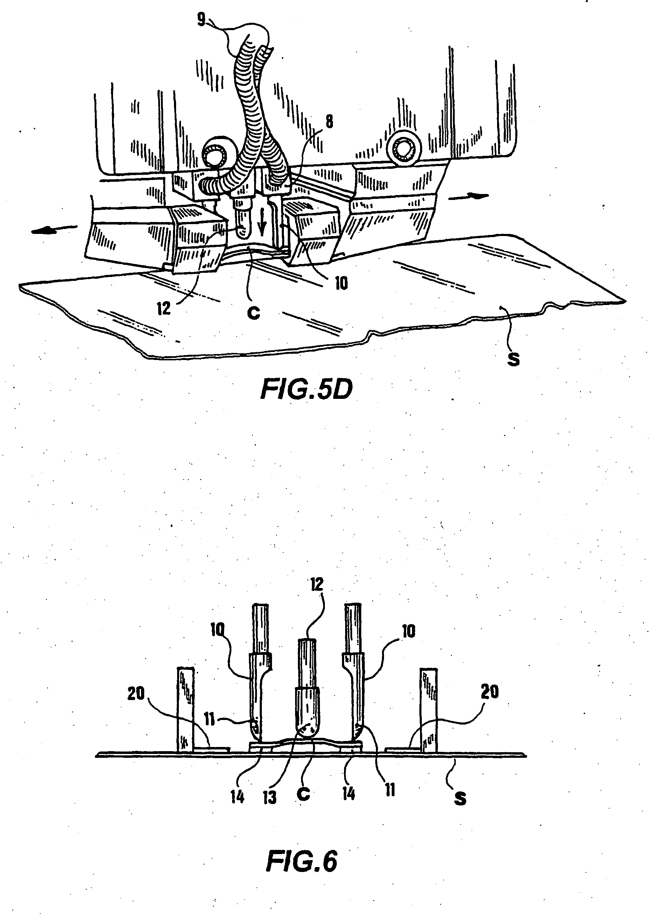

The low-resistance contact electrode 12 forms, with each of the high-resistance electrodes 10 of said pair, a respective and independent electric circuit in combination with said electric cables (figure 6).

The low-resistance contact electrode 12 is it also of cylindrical shape, yet it is solid and having a rounded contact end 13 with a larger contact surface and ensuring a lower contact resistance with respect to the other electrodes 10.

In addition, the device 1 comprises means for flowing current in each of said electric circuits. Such means comprises two independent power supplies, or two electric current generators (not shown) capable of being modulated for power-supplying said circuits independently yet concomitantly and with a respective voltage drop generated by the contact resistance, so that at said contact end 11 a suitable quantity of heat is generated and applied by Joule effect.

Moreover, the device 1 comprises means for controlling and adjusting the voltage or current applied to each of said electric circuits in order to apply the quantity of heat required for each fixing spot.

In particular, with said means it is possible to set the required power. The system, on the basis of the resistance found in each circuit, is capable of adjusting the voltage or current to attain the desired object.

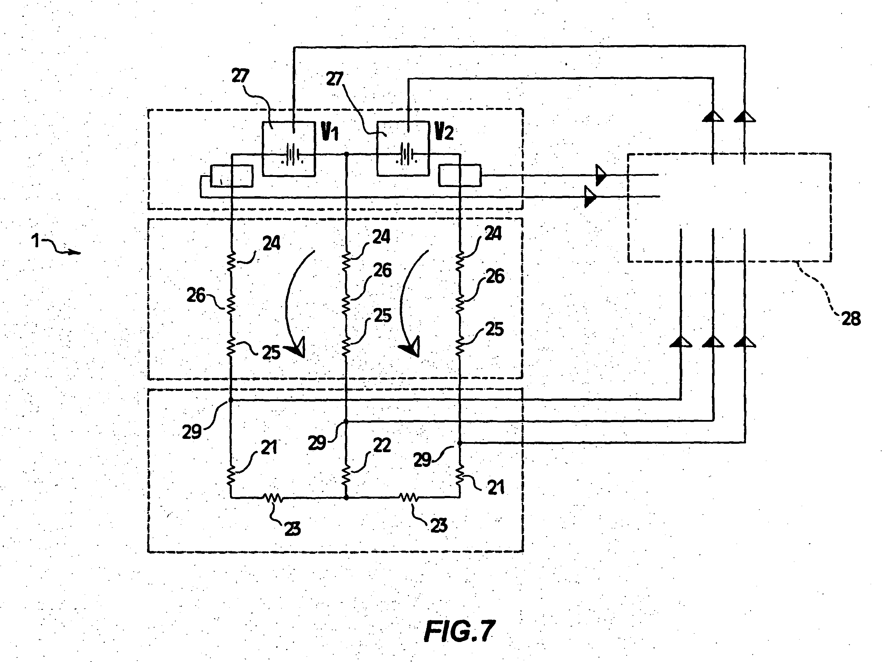

With reference to figure 7, it will be described the circuitry diagram of the device 1, in order to make evident the peculiarities of the device and of the method according to the invention.

In said diagram, the high resistances corresponding to the heating high-resistance electrodes 10 are identified by 21, whereas the low resistance corresponding to the reference low-resistance electrode is indicated by 22. The functional member C to be fixed corresponds to an incidental resistance 23 whereas, for each electrode 10, 12, there are identified first contact resistances 24 of the electrical connections between the power supply cable and the power supply system, second contact resistances 25 of the electrical connections between the power supply cable and the electrodes 10, 12 and connection resistances 26 corresponding to the power supply cables.

The system provides two distinct power supplies 27, one per circuit, generating a current $I_1$ and $I_2$, at voltages $V_1$ and $V_2$, respectively, both variable and controlled by a control unit 28.

Evidently, the power supplies 27 are modulated on the basis of the metered power; therefore, it is very important that this metering be as accurate as possible, and accordingly the related voltage metering takes place near the electrodes 10, 12, at respective metering spots 29, eliminating all errors due to contact resistances and connection resistances.

Hence, said power is yielded by the formula:

$$W_1 = I_1^2 (R_{21}+R_{23}) + I_1(I_1-I_2)R_{22} \quad \text{(power released at the first weld spot)}$$

$$W_2 = I_2^2 (R_{21}^*+R_{23}^*) + I_2(I_2-I_1)R_{22} \quad \text{(power released at the second weld spot)}$$

Where the resistance subscripts consist of the respective numeral references and where $R_{21}^*$ and $R_{23}^*$ indicate the resistances from the side of the second circuit. The disturbance posed by the second addend in each formula is reduced to a minimum, since:

&ast; the low resistance 22 ($R_{22}$) corresponding to the reference electrode 12 is the lowest possible; and

&ast; the circuit branch common to the two circuits, corresponding to the low-resistance reference electrode, is connected to the positive pole of a power supply 27 and to the negative pole of the other power supply; therefore, the current flowing in said branch, of a voltage equal to the absolute value of $I_1-I_2$, nullifies for $I_1 \approx I_2$, a condition occurring when the two weld electrodes are substantially equal, the functional member C to be welded is symmetrical and the system is correctly balanced.

According to a preferred embodiment of the invention, the device further comprises a system for the indirect detection of the temperature in the weld spots onto the functional member C, spots usually comprising tin. In fact, at said spots, in the occurrence of the melting of the weld material, there takes place a sensible nearing between functional member C and support S, i.e. the glass pane. This nearing, actually signaling the occurred melting, can be detected without contact by a telemeter device, e.g., a laser device or a LVDT device (*Linear Variable Differential Transformer).*

By virtue of the telemeter, it is possible to compare the expected value of the melting time to the actual time, thereby also indirectly controlling that the provided quantity of energy to be applied corresponds, actually outputted, to the energy applied to obtain the welding.

Therefore, with the control unit 28 it is possible to set a reference time, more or less of a certain tolerance, within which the melting should occur, on the basis of the provisions made with reference to the quantity of energy to be outputted; otherwise, an alarm message is generated, signaling the outputting of a quantity of energy different from, and in particular greater than, the provided one. Hence, this system is also capable of detecting a possible absence, at the weld spot, of the melting material.

During the process, the system is capable of checking, through the voltage and current intensity values, the amount of power actually applied. By integrating the latter over time the energy is determined, and upon reaching the preset value the welding is completed.

Of course, an operator will be capable of setting said amounts on the basis of the work to be done and of the related parameters: thickness of the glass, thickness and quantity of the weld material, thickness and dimensions of the functional member to be fixed, etc.

Moreover, the operation cycle could comprise steps of preheating and controlled cooling, according to needs.

Conveniently, the preheating is carried out using the same electrodes 10, 12 of the device 1, while the functional member 3 lies in the recess 3 prior to the on-glass application. Advantageously, no additional heating members are required.

Lastly, the device 1 comprises various motor drives to ensure the moving of the arm 5, of the slide 8 pressed onto the functional member C, of the glass pane S and/or of the head 2, etc.

With reference to the above, hereinafter the operation of the present embodiment of device will be described.

The arm 5 picks a functional member C that is arranged onto the operative end 6 thereof and placed in the recess 3 of the device 1, while the catches 20 are retracted in order to allow this insertion.

In this embodiment, the weld material that will make the contact point/spot B has already been added to the functional member C.

The ends of the functional member C are inserted in the grooves 4 and the stopping plates are repositioned to prevent the fall thereof. The slide 8 is lowered, and the electrodes 10, 12 are pressed against the functional member C.

At this step, it is possible to command a current flow according to predefined parameters, for the preheating of the functional member 3 and of the weld material.

Hence, the preheating takes place prior to the step of applying the functional member, using the same electrodes that will subsequently weld.

Then, the recess 3, in particular the functional member C positioned thereat, and the surface of the glass pane S that shall receive the functional member C.

The correct positioning of said components may be attained by providing the device with a blocking system that uses suction cups or the like. Upon having attained the correct positioning, with the resting of the buffers 7 onto the designed surface, the catches 20 retract, and the functional member C is deposited on the desired spot.

Then, current is flown in the two abovementioned electric circuits. Thus, the Joule effect is determined by the concomitant application of said pair of high-resistance contact electrodes 10 onto the functional member C, each electrode at a respective spot B for fixing the functional member C to said surface, and of said low-resistance contact electrode 12 near said high-resistance contact electrodes 10.

The current flow and the voltage drop are monitored and adjusted separately in order to apply the quantity of heat required for each fixing spot B. Thus, at the fixing spots B the weld material melts and the welding is effected.

With this method it is possible to check the welding effected, and also to generate statistics on the behaviour of the electrodes and of the fixed functional member.

Note that, by having an active control on the outputted power, and hence monitoring current and voltage and instantaneously modulating the power supply, it is possible to hold the desired power level, thereby ensuring a remarkable repeatability of the heating. This is important for two reasons: the viscosity of a melting alloy changes drastically, and it is important to repeat the heating mode in order to manage the fluid dynamic behavior of the molten alloy; moreover, the activation of the current flow, and its behavior in the brazing process, changes as a function of the temperature reached and of the moment at which the latter is reached. In the present method, the completion of the welding occurs upon reaching the set energy.

Moreover, in the light of the above besides from a constant power level it is also possible to set also a curve variable over time, in a manner such as to provide a quantity of heat modulated over time.

Note that, with the above-described invention, it is possible to position the heating electrodes at the desired locations and to independently manage the quantity of current circulating in each electrode, so as to autonomously heat each welding pad, regardless of the number of heating electrodes.

In addition, note that in the device there can be advantageously used a control system capable of metering, actively and in real-time with the welding process, the intensity of the circulating current, the applied voltage, the outputted power, the obtained temperature.

To the above-described method and device for fixing functional members to a surface a person skilled in the art, in order to satisfy further and contingent needs, may effect several further modifications and variants, all however encompassed in the protective scope of the present invention, as defined by the appended claims.

**Claims**

1. A method for fixing a functional member (C) to a surface by application of heat obtained by Joule effect, wherein the Joule effect is determined by the concomitant application onto the functional member (C) of a pair of high-resistance contact electrodes (10), each at a respective spot (B) for fixing the functional member (C) to said surface, and of a respective low-resistance contact electrode (12) near said high-resistance contact electrodes, said low-resistance contact electrode (12) making, with each of the high-resistance electrodes (10) of said pair, a respective and independent electric circuit, **characterized in that** each independent electric circuit is power-supplied concomitantly and in which the voltage and the current flow are monitored and adjusted separately in order to apply the quantity of energy required for each fixing spot (B).

2. The method according to claim 1, wherein, upon having concomitantly applied the electrodes (10, 12), electric current is circulated through the electrodes (10, 12) in order to carry out a preheating step prior to the placing of the functional member (C) on said surface.

3. The method according to claim 1, wherein the circuit branch common to said two independent circuits, corresponding to the low-resistance contact electrode (12), is connected to the positive pole of a power supply (27) of an electric circuit and to the negative pole of the other power supply (27) of the other electric circuit.

4. The method according to claim 1, wherein the voltage metering takes place near the electrodes (10, 12) at respective metering spots (29).

5. The method according to claim 1, wherein the distance between functional member (C) and surface is monitored to observe the reduction thereof within a reference time corresponding to a forecast quantity of energy to be applied.

6. A device (1) for fixing a functional member to a surface by application of heat obtained by Joule effect, comprising: a pair of high-resistance contact electrodes (10), each apt to be applied at a respective spot (B) for fixing the functional member (C) to said surface; at least one low-resistance contact electrode (12), apt to be applied near said high-resistance contact electrodes (10), said low-resistance contact electrode (12) making, with each of the high-resistance electrodes (12) of said pair, a respective and independent electric circuit; **characterized by** means for flowing current in each of said electric circuits, comprising a pair of independent power supplies, each apt to supply a respective independent circuit; and means for controlling and adjusting the current and/or voltage applied concomitantly to each of said electric circuits independently the one from the other to apply the quantity of energy required for each fixing spot (B).

7. The device (1) according to claim 1, wherein the circuit branch common to said independent electric circuits and corresponding to said low-resistance contact electrode (12) is connected to the negative pole of a power supply (27) and to the positive pole of the other power supply (27).

8. The device (1) according to claim 6, wherein the voltage metering takes place near the electrodes (10,12) at respective metering spots (29).

9. The device (1) according to claim 6, comprising at least one telemeter system to observe the distance between functional member (C) and surface during the outputting of current at said fixing spots (B).

10. The device (1) according to claim 6, wherein a operative head (2) comprises a recess (3), apt to house said functional member (C), and means for guiding said functional member (C) in an applying position.

11. The device (1) according to claim 10, wherein said means for guiding comprises a pair of vertical grooves (4), formed sideways inside of opposite walls of the recess (3), apt to receive the respective ends of the functional member (C).

12. The device (1) according to claim 10, comprising a pivotable arm (5) provided with an operative end (6) apt to move a functional member (C) for feeding it at said recess (3).

13. The device (1) according to claims 11 and 12, wherein said arm (5) pivots on a plane located below said recess (3), and when the operative end (6) lies at the recess (3), the arm (5) is translated vertically, enabling the operative end (6), provided with the functional member (C), to insert into the recess (3), thereby inserting the ends of the functional member (C) in the respective grooves (4).

14. The device (1) according to claim 10, wherein, at the bottom ends of the grooves (4), there are provided respective catches (20), each arranged transversally to a respective groove (4), said catches (20) being retractable.

15. The device (1) according to claim 6, comprising means for positioning the receiving surface, the functional member (C) and an operative head (2) of the device (1) in an applying position.

16. The device (1) according to claims 10 and 15, wherein said operative head (2) is provided, at said recess (3), with anti-scratch buffers (7) apt to rest onto the receiving surface in said applying position.

17. The device (1) according to claim 6, comprising, inside the recess (3), a power-supplied slide (8), from which said electrodes (10,12) extend bottomward.

18. The device (1) according to claim 6, wherein each high-resistance contact electrode (10) is of cylindrical shape and, at the respective contact ends (11), has a longitudinal removal of material.

19. The device (1) according to claim 6, wherein the low-resistance contact electrode (12) has a rounded contact end (13).

20. The device (1) according to claim 8, wherein, with the means for controlling and adjusting the current and/or voltage applied to each of said electric circuits, there are set the required power and the total energy for heating.

**Patentansprüche**

1. Verfahren zum Befestigen eines Funktionsteils (C) an einer Fläche durch den Einsatz von Wärme, die durch den Joule-Effekt erzielt wird, wobei der Joule-Effekt bewirkt wird, indem auf das Funktionsteil (C) ein Paar Hochwiderstandskontaktelektroden (10) jeweils in einem Punkt (B) zum Befestigen des Funktionsteils (C) an der Fläche und eine Niederwiderstandkontaktselektrode (12) nahe bei den Hochwiderstandskontaktelektroden gleichzeitig auf das Funktionsteil aufgesetzt werden, wobei die Niederwiderstandskontaktelektrode (12) mit jeder der Hochwiderstandselektroden (10) des Paares eine unabhängige elektrische Schaltung bildet, **dadurch gekennzeichnet, dass** jede unabhängige elektrische Schaltung gleichzeitig mit Strom versorgt wird und dass die Spannung und der Stromfluss separat gemessen und eingestellt werden, um die Menge an Energie einzusetzen, die für jeden Befestigungspunkt (B) erforderlich ist.

2. Verfahren nach Anspruch 1, wobei, nachdem die Elektroden (10, 12) gleichzeitig aufgesetzt worden sind, elektrischer Strom durch die Elektroden (10, 12) hindurchgeleitet wird, um einen Vorheizschritt auszuführen, bevor das Funktionsteil (C) auf der Fläche platziert wird.

3. Verfahren nach Anspruch 1, wobei der den beiden unabhängigen Schaltungen gemeinsame Schaltungszweig, welcher der Niederwiderstandskontaktelektrode (12) entspricht, mit dem positiven Pol einer Stromversorgung (27) von einer elektrischen Schaltung und mit dem negativen Pol der anderen Stromversorgung (27) von der anderen elektrischen Schaltung verbunden ist.

4. Verfahren nach Anspruch 1, wobei die Spannungsmessung nahe den Elektroden (10, 12) in Messpunkten (29) erfolgt.

5. Verfahren nach Anspruch 1, wobei der Abstand zwischen dem Funktionsteil (C) und der Fläche überwacht wird, um die Reduktion desselben innerhalb einer Referenzzeit, welche einer vorhergesagten Menge an einzusetzender Energie entspricht, zu beobachten.

6. Vorrichtung (1) zum Befestigen eines Funktionsteils an einer Fläche durch den Einsatz von Wärme, die durch den Joule-Effekt erzielt wird, mit: einem Paar Hochwiderstandskontaktelektroden (10), von denen jede dafür ausgebildet ist, in einem Punkt (B) aufgesetzt zu werden, um das Funktionsteil (C) an der Fläche zu befestigen; wenigstens einer Niederwiderstandskontaktelektrode (12), die dafür ausgebildet ist, nahe bei den Hochwiderstandskontaktelektroden (10) aufgesetzt zu werden, wobei die Niederwiderstandskontaktelektrode (12) mit jeder der Hochwiderstandselektroden (12) des Paares eine unabhängige elektrische Schaltung bildet, **gekennzeichnet durch** eine Einrichtung zum Fließenlassen von Strom in jeder der elektrischen Schaltungen, mit einem Paar unabhängiger Stromversorgungen, von denen jede in der Lage ist, eine unabhängige Schaltung zu versorgen; und **durch** eine Einrichtung zum Steuern und Einstellen des Stroms und/oder der Spannung, welche gleichzeitig jeder der elektrischen Schaltungen unabhängig von der anderen zugeführt werden, um die Menge an Energie einzusetzen, welche für jeden Befestigungspunkt (B) erforderlich ist.

7. Vorrichtung (1) nach Anspruch 1, wobei der Schaltungszweig, welcher den unabhängigen elektrischen Schaltungen gemeinsam ist und der Niederwiderstandskontaktelektrode (12) entspricht, mit dem negativen Pol einer Stromversorgung (27) und mit dem positiven Pol der anderen Stromversorgung (27) verbunden ist.

8. Vorrichtung (1) nach Anspruch 6, wobei die Spannungsmessung in der Nähe der Elektroden (10, 12) in Messpunkten (29) erfolgt.

9. Vorrichtung (1) nach Anspruch 6, mit wenigstens einem Fernmesssystem zum Beobachten der Distanz zwischen dem Funktionsteil (C) und der Fläche während der Abgabe von Strom an den Befestigungspunkten (B).

10. Vorrichtung (1) nach Anspruch 6, wobei ein Arbeitskopf (2) eine Ausnehmung (3) aufweist, die in der Lage ist, das Funktionsteil (C) aufzunehmen, und eine Einrichtung zum Führen des Funktionsteils (C) in eine Aufsetzposition.

11. Vorrichtung (1) nach Anspruch 10, wobei die Einrichtung zum Führen ein Paar vertikale Nuten (4) aufweist, die seitlich innerhalb von einander gegenüberliegenden Wänden der Ausnehmung (3) gebildet und dazu dienen, die Enden des Funktionsteils (C) aufzunehmen.

12. Vorrichtung (1) nach Anspruch 10, mit einem schwenkbaren Arm (5), der mit einem Arbeitsende (6) versehen ist, welches dafür ausgebildet ist, ein Funktionsteil (C) zu bewegen, um es in die Ausnehmung (3) zu befördern.

13. Vorrichtung (1) nach den Ansprüchen 11 und 12, wobei der Arm (5) auf einer Ebene schwenkt, die unterhalb der Ausnehmung (3) angeordnet ist, und wobei, wenn das Arbeitsende (6) in der Ausnehmung (3) liegt, der Arm (5) vertikal verschoben wird, was das Arbeitsende (6), das mit dem Funktionsteil (C) versehen ist, in die Lage versetzt, in die Ausnehmung (3) einzufassen, wodurch die Enden des Funktionsteils (C) in die Nuten (4) eingeführt werden.

14. Vorrichtung (1) nach Anspruch 10, wobei an den unteren Enden der Nuten (4) Sperren (20) vorhanden sind, die jeweils quer zu einer Nut (4) angeordnet sind, wobei die Sperren (20) zurückziehbar sind.

15. Vorrichtung (1) nach Anspruch 6, mit einer Einrichtung zum Positionieren der aufnehmenden Fläche, des Funktionsteils (C) und eines Arbeitskopfes (2) der Vorrichtung (1) in einer Aufsetzposition.

16. Vorrichtung (1) nach den Ansprüchen 10 und 15, wobei der Arbeitskopf (2) in der Ausnehmung (3) mit nicht kratzenden Puffern (7) versehen ist, die in der Lage sind, auf der aufnehmenden Fläche in der Aufsetzposition zu ruhen.

17. Vorrichtung (1) nach Anspruch 6, mit einem innerhalb der Ausnehmung (3) mit Energie versorgtem Schieber (8), von welchem aus sich die Elektroden (10. 12) nach unten erstrecken.

18. Vorrichtung (1) nach Anspruch 6, wobei jede Hochwiderstandskontaktelektrode (10) von zylindrischer Form ist und an den Kontaktenden (11) einen longitudinalen Materialabtrag hat.

19. Vorrichtung (1) nach Anspruch 6, wobei die Niederwiderstandskontaktelektrode (12) ein abgerundetes Kontaktende (13) hat.

20. Vorrichtung (1) nach Anspruch 8, wobei mit der Einrichtung zum Steuern und Einstellen des Stroms und/oder der Spannung, welche jeder der elektrischen Schaltungen zugeführt werden, die erforderliche Leistung und die Gesamtenergie zum Erhitzen eingestellt werden.

**Revendications**

1. Procédé pour fixer un organe fonctionnel (C) à une surface par application de chaleur obtenue par l'effet Joule, dans lequel l'effet Joule est déterminé par l'application concomitante sur l'organe fonctionnel (C) d'une paire d'électrodes de contact à haute résistance (10), chacune à un point respectif (B) pour fixer l'organe fonctionnel (C) à ladite surface, et d'une électrode de contact à basse résistance respective (12) près desdites électrodes de contact à haute résistance, ladite électrode de contact à basse résistance (12) établissant, avec chacune des électrodes à haute résistance (10) de ladite paire, un circuit électrique respectif et indépendant, **caractérisé en ce que** chaque circuit électrique indépendant est alimenté de façon concomitante et dans lequel la tension et le flux de courant sont surveillés et ajustés séparément afin d'appliquer la quantité d'énergie requise pour chaque point de fixation (B).

2. Procédé selon la revendication 1, dans lequel, lors de l'application concomitante des électrodes (10, 12), un courant électrique est acheminé à travers les électrodes (10, 12) afin d'effectuer une étape de préchauffage avant placement de l'élément fonctionnel (C) sur ladite surface.

3. Procédé selon la revendication 1, dans lequel la branche de circuit commune auxdits deux circuits indépendants, correspondant à l'électrode de contact à basse résistance (12), est connectée au pôle positif d'une source d'alimentation (27) d'un circuit électrique et au pôle négatif de l'autre source d'alimentation (27) de l'autre circuit électrique.

4. Procédé selon la revendication 1, dans lequel la mesure de tension est effectuée près des électrodes (10, 12) aux points de mesure (29) respectifs.

5. Procédé selon la revendication 1, dans lequel la distance entre l'élément fonctionnel (C) et la surface est surveillée pour observer sa réduction en un temps de référence correspondant à une quantité d'énergie devant être appliquée prévue.

6. Dispositif (1) pour fixer un organe fonctionnel à une surface par application de chaleur obtenue par l'effet Joule, comprenant : une paire d'électrodes de contact à haute résistance (10), chacune étant apte à être appliquée à un point respectif (B) pour fixer l'organe fonctionnel (C) à ladite surface ; au moins une électrode de contact à basse résistance (12), apte à être appliquée près desdites électrodes de contact à haute résistance (10), ladite électrode de contact à basse résistance (12) établissant, avec chacune des électrodes à haute résistance (12) de ladite paire,

9

un circuit électrique respectif et indépendant ; **caractérisé par** des moyens pour acheminer le courant dans chacun desdits circuits électriques, comprenant une paire de sources d'alimentation indépendantes, chacune étant apte à alimenter un circuit indépendant respectif ; et des moyens pour contrôler et ajuster le courant et/ou la tension appliqué(e) de façon concomitante à chacun desdits circuits électriques indépendamment l'un de l'autre pour appliquer la quantité d'énergie requise pour chaque point de fixation (B).

7.  Dispositif (1) selon la revendication 1, dans lequel la branche de circuit commune auxdits circuits électriques indépendants et correspondant à ladite électrode de contact à basse résistance (12) est connectée au pôle négatif d'une source d'alimentation (27) et au pôle positif de l'autre source d'alimentation (27).

8.  Dispositif (1) selon la revendication 6, dans lequel la mesure de tension est effectuée près des électrodes (10, 12) aux points de mesure (29) respectifs.

9.  Dispositif (1) selon la revendication 6, comprenant au moins un système de télémétrie pour observer la distance entre l'organe fonctionnel (C) et la surface pendant la sortie de courant au niveau desdits points de fixation (B).

10. Dispositif (1) selon la revendication 6, dans lequel une tête opérationnelle (2) comprend un évidement (3), apte à loger ledit organe fonctionnel (C), et des moyens pour guider ledit organe fonctionnel (C) dans une position d'application.

11. Dispositif (1) selon la revendication 10, dans lequel lesdits moyens de guidage comprennent une paire de rainures verticales (4), formées de part et d'autre à l'intérieur de parois opposées de l'évidement (3), aptes à recevoir les extrémités respectives de l'organe fonctionnel (C).

12. Dispositif (1) selon la revendication 10, comprenant un bras pivotable (5) doté d'une extrémité opérationnelle (6) apte à déplacer un organe fonctionnel (C) pour l'amener au niveau dudit évidement (3).

13. Dispositif (1) selon les revendications 11 et 12, dans lequel ledit bras (5) pivote sur un plan situé en dessous dudit évidement (3), et lorsque l'extrémité opérationnelle (6) se trouve au niveau de l'évidement (3), le bras (5) est déplacé verticalement, permettant à l'extrémité opérationnelle (6), dotée de l'organe fonctionnel (C), de s'insérer dans l'évidement (3), permettant ainsi d'insérer les extrémités de l'organe fonctionnel (C) dans les rainures respectives (4).

14. Dispositif (1) selon la revendication 10, dans lequel, sur les extrémités inférieures des rainures (4), se trouvent des crochets respectifs (20), chacun étant agencé transversalement à une rainure respective (4), lesdits crochets (20) étant rétractables.

15. Dispositif (1) selon la revendication 6, comprenant des moyens pour positionner la surface de réception, l'élément fonctionnel (C) et une tête opérationnelle (2) du dispositif (1) dans une position d'application.

16. Dispositif (1) selon les revendications 10 et 15, dans lequel ladite tête opérationnelle (2) est dotée, au niveau dudit évidement (3), de tampons anti-éraflures (7) aptes à reposer sur la surface de réception dans ladite position d'application.

17. Dispositif (1) selon la revendication 6, comprenant, à l'intérieur de l'évidement (3), un coulisseau alimenté électriquement (8), à partir duquel lesdites électrodes (10, 12) s'étendent vers le bas.

18. Dispositif (1) selon la revendication 6, dans lequel chaque électrode de contact à haute résistance (10) est de forme cylindrique et, aux extrémités de contact respectives (11), présente une élimination longitudinale de matière.

19. Dispositif (1) selon la revendication 6, dans lequel l'électrode de contact à basse résistance (12) a une extrémité de contact arrondie (13).

20. Dispositif (1) selon la revendication 8, dans lequel, avec les moyens de contrôle et d'ajustement du courant et/ou de la tension appliqué(e) à chacun desdits circuits électriques, sont définis la puissance requise et l'énergie totale de chauffage.

**FIG.1**

**FIG.2**

**FIG.3**

**FIG.4**

FIG.5A

FIG.5B

FIG.5C

EP 1 577 046 B1

FIG.5D

FIG.6

14

FIG.7

**EP 1 577 046 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 41928 B
- US 6335514 B2
- US 4908938 A
- US 4418264 A